# EUROPEAN PATENT APPLICATION

(11) **EP 4 489 391 A1**
(43) Date of publication of application: **08.01.2025**
(21) Application number: 22928789.1
(22) Date of filing: 28.02.2022
(51) Int. Cl.: H04N 7/18

(54) **DISPLAY DEVICE**

(71) Applicant: Pioneer Corporation, Tokyo 113-0021 (JP)
(72) Inventor: HAGINOYA, Junichi, Tokyo 113-0021 (JP); YOSHIDA, Tetsuya, Tokyo 113-0021 (JP); MATSUMOTO, Daisuke, Tokyo 113-0021 (JP)
(74) Representative: Grünecker Patent- und Rechtsanwälte PartG mbB
(86) International application number: PCT/JP2022/008411
(87) International publication number: WO 2023/162267

(57) **Abstract**

Fine adjustment of a section is enabled when designating the section from a movement track of an object displayed on a map, and time and effort for the adjustment is reduced, so that usability is improved. Items each representing a position of the object with a first time interval are displayed as the track of the object on the map, and any one of the items is set as a first selection point. A plurality of items each representing the position of the object with a second time interval longer than the first time interval is extracted as second selection point candidates from a time associated to the first selection point having been set, and the extracted items are displayed in a selectable state. After setting the first selection point, a first selection point setting unit receives correction of the first selection point to another item in units of the first time interval. A second selection point candidate display unit extracts again, as the second selection point candidates, a plurality of items each representing the position with a second time interval from a time associated to the corrected first selection point.

## Description

### Technical Field

The present invention relates to a display device.

### Background Art

A video management system that acquires an arbitrary video among videos captured by a device such as a drive recorder is known (see, for example, Patent Literature 1).

Patent Literature 1 discloses a video management system that displays operation track information of a dust collector on a map image in response to a request from a client computer, receives designation of a position on the displayed track, and extracts and distributes a recorded video corresponding to a passage time at which the dust collector passes through the designated position and a certain time range before and after the passage time.

### Citation List

### Patent Literature

Patent Literature 1: JP 2019-83379 A

### Summary of Invention

### Technical Problem

In the video management system as described in Patent Literature 1, a recorded video corresponding to a designated position and a certain range before and after the designated position is extracted from a traveling track of a vehicle displayed on a map. Therefore, it may be difficult to finely adjust a range in which a video can be acquired.

In order to solve such a problem, for example, it is conceivable to enable fine adjustment of a designated section by displaying items each representing a position of a vehicle for each time as a traveling track on a map in a selectable state, receiving selection of one item and another item, and designating a section for acquiring a video between the designated items. In this case, since an interval between the items is the minimum unit of an adjustment width of the designated section, the designated section can be finely adjusted as the interval between the items is narrowed.

However, it is considered that, as the interval between the items is narrowed, time and effort for considering an item to be selected increase, and usability deteriorates.

As an example of the problem to be solved by the present invention, fine adjustment of a section for acquiring a video is enabled when designating the section from a movement track of an object displayed on a map, and time and effort for the adjustment is reduced, so that usability is improved.

### Solution to Problem

In order to solve the above problem, in an invention according to claim 1, a display device that displays items each representing a position of an object with a first time interval as a track of the object on a map includes: a first selection point setting unit that receives selection of any one of the items and sets the selected item as a first selection point; a second selection point candidate display unit that extracts, as second selection point candidates, the plurality of items each representing the position of the object with a second time interval longer than the first time interval from a time associated to the first selection point having been set, and displays the extracted items in a selectable state; and a section setting unit that receives selection of any one of the second selection point candidates, sets an item associated to the selected second selection point candidate as a second selection point, and sets a section defined by the item having been set as the first selection point and the item having been set as the second selection point as a designated section, in which after setting any one of the items as the first selection point, the first selection point setting unit receives correction of the first selection point to another item in units of the first time interval, and sets the another item as a corrected first selection point, and the second selection point candidate display unit extracts again, as the second selection point candidates, the plurality of items each representing the position with a second time interval from a time associated to the corrected first selection point, and displays the extracted items in a selectable state.

In an invention according to claim 5, an information processing method executed by a computer includes: a track point display step of displaying items each representing a position of an object with a first time interval as a track of the object on a map; a first selection point setting step of receiving selection of any one of the items and setting the selected item as a first selection point; a second selection point candidate display step of extracting, as second selection point candidates, the plurality of items each representing the position of the object with a second time interval longer than the first time interval from a time associated to the first selection point having been set, and displaying the extracted items in a selectable state; and a section setting step of receiving selection of any one of the second selection point candidates, setting the item associated to the selected second selection point candidate as a second selection point, and setting a section defined by the item having been set as the first selection point and the item having been set as the second selection point as a designated section, in which in the section setting step, after setting the designated section, correction of the first selection point to another item is received in units of the first time interval, and the another item is set as a corrected first selection point, and the plurality of items each representing the position with a second time interval are extracted again as the second selection point candidates from a time associated to the corrected first selection point, and the extracted items are displayed in a selectable state.

In an invention according to claim 6, the information processing method according to claim 5 is executed as an information processing program by a computer.

In an invention according to claim 7, the information processing program according to claim 6 is stored in a computer-readable storage medium.

### Brief Description of Drawings

Fig. 1 is a schematic configuration diagram of a video acquisition system according to an embodiment of the present invention.
Fig. 2 is a view illustrating an example of track point information displayed on an output unit.
Fig. 3 is a view illustrating a list of track point items.
Fig. 4 is a view illustrating a state of deletion of track point items in the list.
Fig. 5 is a view illustrating a state of integration of track point items in the list.
Fig. 6 is a view illustrating a state in which end point candidates are displayed on a map.
Fig. 7 is a view illustrating a state in which a designated section is displayed on the map.
Fig. 8 is a flowchart of an operation of the video acquisition system illustrated in Fig. 1.
Fig. 9 is a flowchart of a detailed operation in step S200 of Fig. 8.
Fig. 10 is a flowchart of a detailed operation in step S300 of Fig. 8.
Fig. 11 is a flowchart of a detailed operation in step S400 of Fig. 8.

### Description of Embodiments

Hereinafter, a display device according to an embodiment of the present invention will be described. The display device according to an embodiment of the present invention is a display device that displays items each representing a position of an object with a first time interval as a track of the object on a map. In the display device, a first selection point setting unit receives selection of any one of the items and sets the selected item as a first selection point. Then, a second selection point candidate display unit extracts, as second selection point candidates, a plurality of items each representing the position of the object with a second time interval longer than the first time interval from a time associated to the first selection point having been set, and displays the extracted items in a selectable state. Then, a section setting unit receives selection of any one of the second selection point candidates, sets an item associated to the selected second selection point candidate as a second selection point, and sets, as a designated section, a section defined by the item having been set as the first selection point and the item having been set as the second selection point. After setting any one item as the first selection point, the first selection point setting unit receives correction of the first selection point to another item in units of the first time interval, and sets the another item as a corrected first selection point. The second selection point candidate display unit extracts again, as the second selection point candidates, a plurality of items each representing the position with a second time interval from a time associated to the corrected first selection point, and displays the extracted items in a selectable state. With this configuration, it is possible to reduce time and effort for considering an item to be set as the second selection point as compared with the case of considering an item to be set as the first selection point. Furthermore, in a case where the first selection point is corrected, the second selection point candidates are extracted again in units of the second time interval, and thus, it is possible to reduce time and effort for considering an item to be selected while finely adjusting the designated section. Fine adjustment of a section for acquiring a video is enabled when designating the section from a movement track of an object displayed on a map, and time and effort for the adjustment is reduced, so that usability can be improved.

In addition, the second selection point candidate display unit may set the second time interval based on at least one of object information indicating information regarding the object corresponding to the item or surrounding information indicating surroundings of the object corresponding to the item. With this configuration, the second time interval can be dynamically changed according to a state of the object corresponding to the item and the surroundings of the object corresponding to the item.

Further, the object information is information regarding a speed of the object, and the second selection point candidate display unit may set the second time interval to be shorter as the speed of the object increases, and may set the second time interval to be longer as the speed of the object decreases. With this configuration, for example, in a case of acquiring a video when the object is traveling at a high speed on an expressway, it is possible to prevent the amount of information obtained from the acquired image from becoming too large. Furthermore, for example, in a case of acquiring a video when the object is traveling at a low speed on a general road, it is possible to prevent the amount of information obtained from the acquired image from becoming too small. With this configuration, the excessive divergence or proximity of the plurality of second selection point candidates is suppressed.

Further, the surrounding information is traffic jam status information, and the second selection point candidate display unit may set the second time interval to be longer in a case where the traffic jam status information is obtained than in a case where the traffic jam status information is not obtained. With this configuration, in a case of acquiring a video in a situation where it is difficult for the object to travel in a traveling direction due to occurrence of a traffic jam, it is possible to prevent information obtained from the acquired image from becoming too small.

Furthermore, an information processing method according to a position embodiment of the present invention is an information processing method executed by a computer. In the information processing method, in a track point display step, items each representing a position of an object with a first time interval are displayed as a track of the object on a map. Then, in a first selection point setting step, selection of any one of the items is received, and the selected item is set as a first selection point. Then, in a second selection point candidate display step, a plurality of items each representing the position of the object with a second time interval longer than the first time interval is extracted as second selection point candidates from a time associated to the first selection point having been set, and the extracted items are displayed in a selectable state. Then, in a section setting step, selection of any one of the second selection point candidates is received, an item associated to the selected second selection point candidate is set as a second selection point, and a section defined by the item having been set as the first selection point and the item having been set as the second selection point is set as a designated section. In the section setting step, after setting the designated section, correction of the first selection point to another item can be received in units of the first time interval and the another item can be set as a corrected first selection point. In a case where the corrected first selection point is set, a plurality of items each representing the position with a second time interval from a time associated to the corrected first selection point is extracted again as the second selection point candidates and the extracted items are displayed in a selectable state. With this configuration, fine adjustment of a section for acquiring a video is enabled when designating the section from a movement track of an object displayed on a map, and time and effort for the adjustment is reduced, so that usability can be improved.

Furthermore, the above-described information processing method may be executed by a computer as an information processing program. With this configuration, fine adjustment of a section for acquiring a video using the computer is enabled when designating the section from a movement track of an object displayed on a map. Furthermore, at this time, time and effort for the adjustment can be reduced, so that the usability can be improved.

Furthermore, the above-described information processing program may be stored in a computer-readable storage medium. With this configuration, the information processing program can be distributed alone in addition to being incorporated in a device, and version upgrade or the like can be easily performed.

### Embodiment

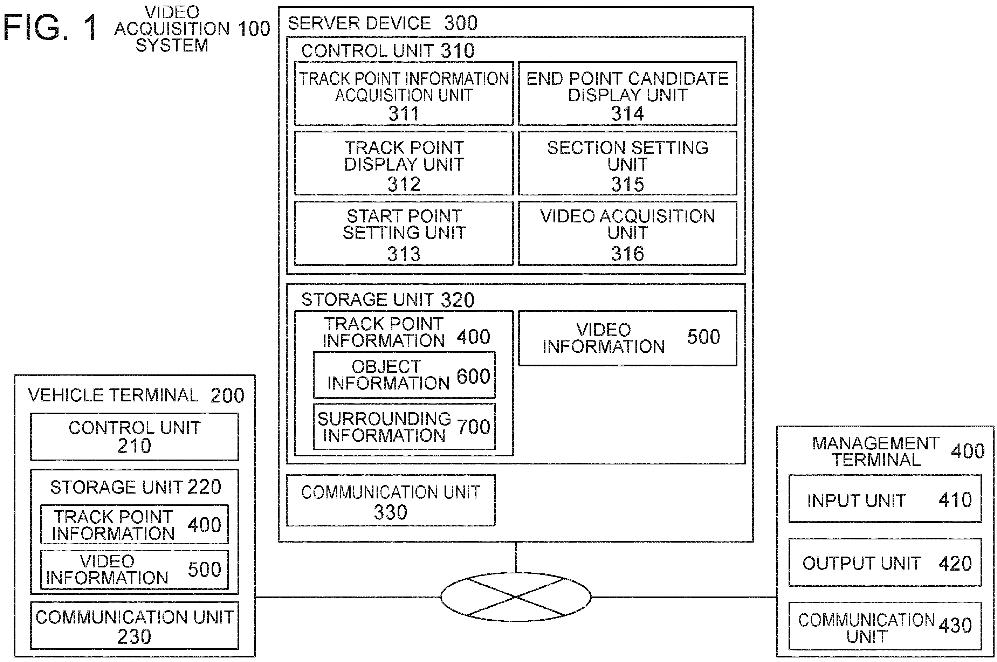

Fig. 1 is a diagram illustrating a video acquisition system 100 according to an embodiment of the present invention. The video acquisition system 100 includes a vehicle terminal 200, a server device 300, and a management terminal 400. The vehicle terminal 200 is, for example, a device installed in a vehicle (object) (for example, a car navigation system) or a device carried by a person (for example, a smartphone). The server device 300 is, for example, a device managed by a provider (for example, a company) who provides the video acquisition system 100 as a service. The management terminal 400 is, for example, a device managed by a user (for example, an administrator of the vehicle) who uses the video system 100. The server device 300 and the management terminal 400 are examples of a display device according to the embodiment.

As illustrated in Fig. 1, the vehicle terminal 200 includes a control unit 210, a storage unit 220, and a communication unit 230. The control unit 210 is implemented by, for example, a central processing unit (CPU). The storage unit 220 is a hard disk drive or a memory. The communication unit 230 is a communication device for transmitting and receiving information to and from other devices.

The control unit 210 executes processing of storing, in the storage unit 220, information such as track point information 400 or video information 500 acquired by the vehicle terminal 200. Furthermore, the control unit 210 executes processing of transmitting information such as the track point information 400 or the video information 500 to the server device 300 by using the communication unit 230.

The track point information 400 is mainly information indicating a position (latitude and longitude) of the vehicle for each time, and includes time information such as date and time, position information indicating latitude and longitude, and travel information including information regarding a traveling direction of the vehicle and information regarding a speed of the vehicle. The track point information 400 may further include vehicle type information, driver information, weather information associated to time information, traffic jam status information, place name information, gradient information, information indicating going or returning on a traveling route of the vehicle, and the like.

The control unit 210 executes processing of acquiring the track point information 400 from, for example, a global positioning system (GPS) receiver, various sensors such as a gyro sensor and an acceleration sensor, an external device that transmits weather information or traffic information, or the like, storing the track point information 400 for each predetermined time (for example, 3 seconds) as one set in the storage unit 220, and transmitting a plurality of sets (e.g., for 300 seconds) to the server device 300 as needed by using the communication unit 230.

The video information 500 is information regarding a video captured by an imaging device such as a camera mounted on the vehicle, and includes video data of an area outside the vehicle and video data of an area inside the vehicle, the video data being obtained by constantly performing imaging by the vehicle. The control unit 210 stores the video information 500 in the storage unit 220 and executes, in a case where there is a request from the server device 300, processing of transmitting the requested video information 500 to the server device 300 by using the communication unit 230.

In addition, when storing one set of the above-described track point information 400 in the storage unit 220, the control unit 210 may store the video information 500 corresponding to the set in the storage unit 220 together, and transmit the video information 500 for a plurality of sets together when transmitting the plurality of sets to the server device 300, thereby transmitting the video information 500 to the server device 300 even in a case where there is no request.

As illustrated in Fig. 1, the server device 300 includes a control unit 310, a storage unit 320, and a communication unit 330. The control unit 310 is implemented by, for example, a central processing unit (CPU). The storage unit 320 is a hard disk drive or a memory. The communication unit 330 is a communication device for transmitting and receiving information to and from other devices.

The control unit 310 includes a track point information acquisition unit 311, a track point display unit 312, a start point setting unit 313 (first selection point setting unit), an end point candidate display unit 314 (second selection point candidate display unit), a section setting unit 315, and a video acquisition unit 316.

The track point information acquisition unit 311 executes processing of storing the track point information 400 received by the communication unit 330 from the vehicle terminal 200 in the storage unit 320 as a travel history of the vehicle.

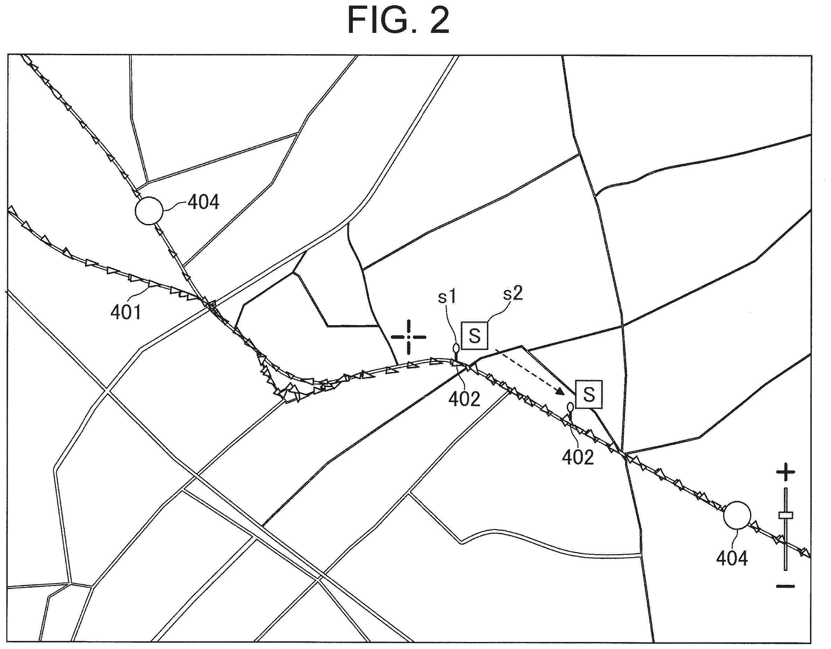

The track point display unit 312 receives an operation from an input unit 410 described below via the communication unit 330 and a communication unit 430 of the management terminal 400 described below. Once the operation is received, the track point information 400 corresponding to the travel history stored in the storage unit 320 is displayed on an output unit 420 of the management terminal 400 via the communication unit 330 and the communication unit 430. Fig. 2 is a view illustrating an example of the track point information 400 displayed on the output unit 420 of the management terminal 400. Here, the position of the vehicle for each time is displayed on a map as a track point item 401 (item) of the vehicle.

Each track point item 401 represents the position of the vehicle with a time interval of 3 seconds (first time interval). One track point items 401 has an isosceles triangle shape, and an orientation of a vertex angle represents the traveling direction of the vehicle. In addition, each track point item 401 is color-coded according to the speed of the vehicle, and is configured in such a way that a change in vehicle speed can be visually recognized.

The start point setting unit 313 receives selection of any one of the track point items 401 by an operation received from the input unit 410 of the management terminal 400 via the communication unit 330 and the communication unit 430, and sets the selected track point item 401 as a start point 402. The start point 402 in the present embodiment refers to a point selected before an end point 408 to be described below, and is not necessarily a point indicating a time before the end point 408. When selecting the start point 402, a cursor is placed on a target track point item 401 with a mouse or the like, and the selection is performed by clicking or the like. A pin-like start point pin s1 is displayed at the set start point 402, and a start point mark s2 indicated by the alphabet S is displayed in the vicinity of the start point pin s1.

The start point pin s1 and the start point mark s2 can be moved to another track point item 401, and after the movement, the track point item 401 on which the start point pin s1 is displayed is set as a new start point 402. That is, after setting any one of the track point items 401 as the start point 402, the start point setting unit 313 receives correction of the start point 402 to another track point item 401 in units of the first time interval, and sets the another track point item 401 as a new start point 402. In this manner, the selected start point 402 can be corrected.

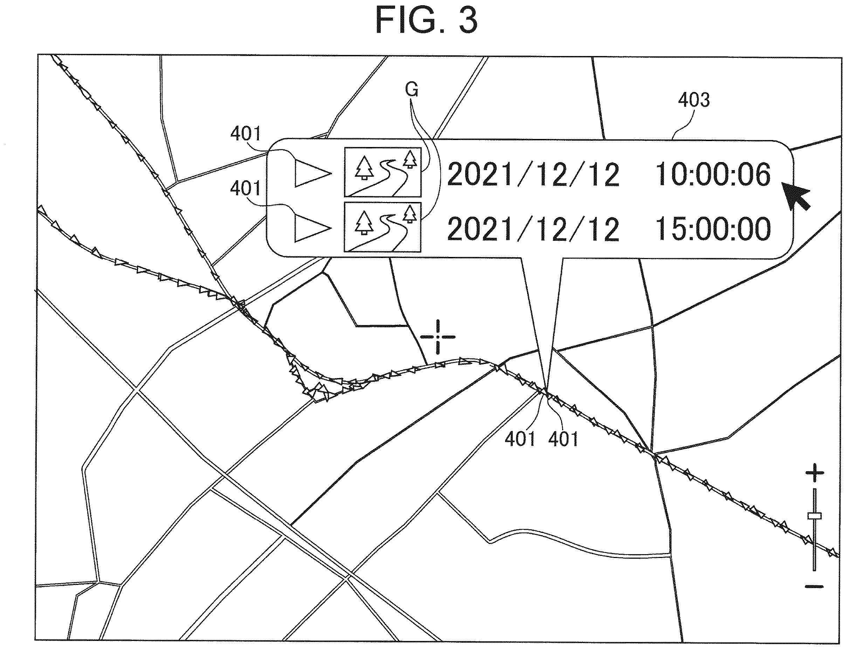

As illustrated in Fig. 3, when receiving the selection of any one of the track point items 401 (that is, when, for example, a mouse over is performed on the track point item 401), in a case where there is a plurality of track point items 401 within a predetermined range, the start point setting unit 313 displays the plurality of track point items 401 as a list 403 in a selectable state. In the present embodiment, the list 403 is displayed in a case where the plurality of track point items 401 is displayed in an overlapping manner on the map for reasons such as that the vehicle has stopped for a certain period of time, that the vehicle has passed the same position in different directions, and the like.

As illustrated in Fig. 3, the list 403 may include at least one pieces of track point information 400 described above (the travel information including the time information such as date and time, the position information indicating the latitude and longitude, the information regarding the traveling direction of the vehicle, and the information regarding the speed of the vehicle) corresponding to each track point item 401, such as the time information (2021/12/12, 10:00:06, and 2021/12/12, 15:00:00). Examples of the track point information 400 included in the list 403 further include the vehicle type information, the driver information, the weather information associated to the time information, the traffic jam status information, the place name information, the gradient information, and the information indicating going or returning on the traveling route of the vehicle. In addition, as illustrated in Fig. 3, each track point item 401 may be enlarged and displayed in the list 403 so that the above-described travel information, that is, the information regarding the traveling direction of the vehicle or the information regarding the speed of the vehicle can be visually recognized. Further, the list 403 may include a video corresponding to the track point item 401, the video being captured by the vehicle. Examples of the video may include a thumbnail image G created based on the video information 500 transmitted in a case where there is no request from the server device 300 described above.

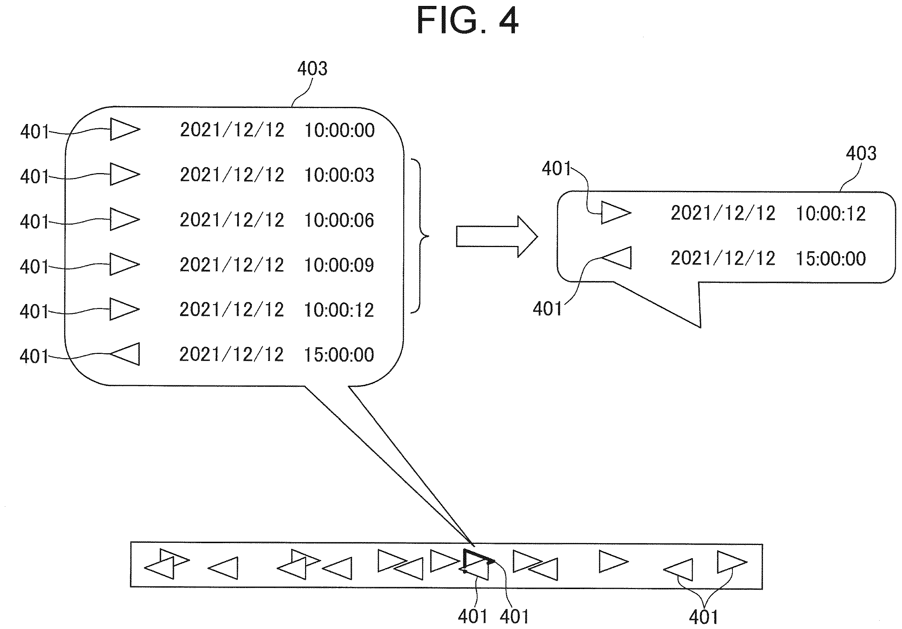

In a case where the list 403 includes a plurality of track point items 401 corresponding to a time from the start of the stop of the vehicle to the end of the stop of the vehicle (for example, this occurs in a case where track point items are displayed in an overlapping manner on the map due to the stop of the vehicle), the start point setting unit 313 may delete, from the list 403, items other than one track point item 401 among the plurality of track point items 401 corresponding to the time from the start of the stop of the vehicle to the end of the stop of the vehicle in the list 403 as illustrated in Fig. 4.

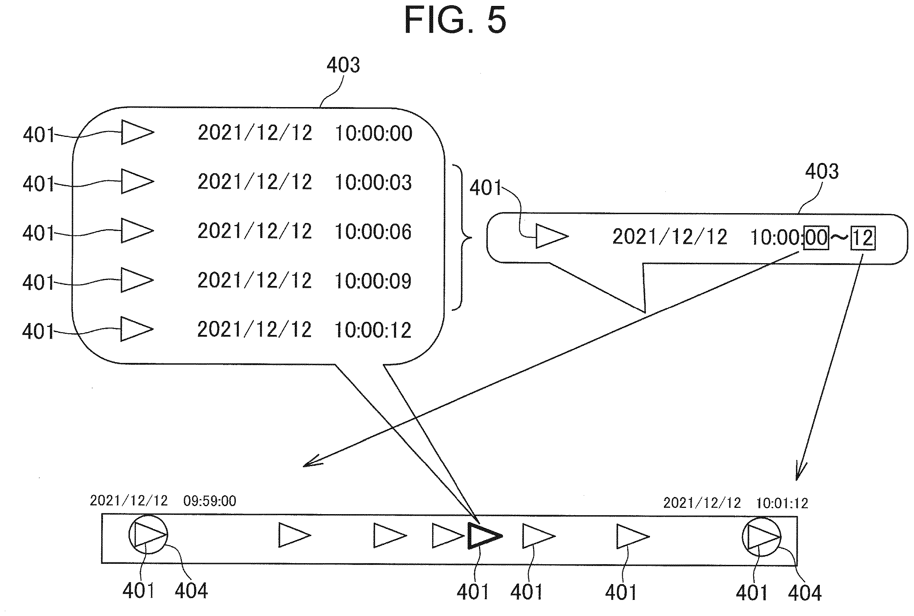

In addition, as illustrated in Fig. 5, the start point setting unit 313 may integrate the plurality of track point items 401 corresponding to the time from the start of the stop of the vehicle to the end of the stop of the vehicle in the list 403, and display the integrated track point items as one track point item 401 corresponding to a predetermined time from the start of the stop of the vehicle to the end of the stop of the vehicle in the list 403. In this manner, the server device 300 displays the track point item 401 representing the position of the vehicle with a time interval of 3 seconds on the map as the track of the vehicle.

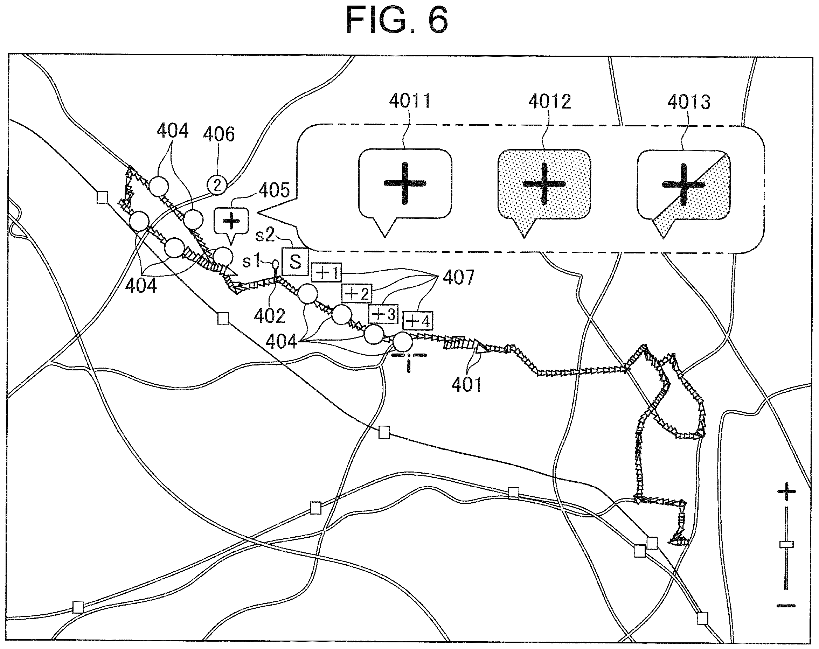

The end point candidate display unit 314 receives an operation from the input unit 410 of the management terminal 400 via the communication unit 330 and the communication unit 430, extracts a plurality of end point candidates 404 from other track point items 401 based on the set start point 402, and displays the extracted end point candidates on the output unit 420 of the management terminal 400 in a selectable state. At this time, as illustrated in Fig. 6, the end point candidates 404 extracts, as the end point candidates 404, a plurality of track point items 401 each representing the position of the vehicle with a second time interval longer than the first time interval from a time associated to the set start point 402.

As a premise, for example, in a transportation company or the like, compliance with various rules is required in a specific place such as a crossing, a temporary stop position, or a right/left turn position, or in a specific traveling state such as traveling forward or backward, and the administrator views an actual video to check whether or not a driver has violated the rules, thereby confirming whether or not the driver has thoroughly complied with the rules.

Here, when the administrator using the video acquisition system 100 specifies the start point 402 in specifying a section of a video desired to be acquired, it is preferable that the first time interval described above is set to a short unit of, for example, about 3 seconds, so that the vicinity of a specific place such as the vicinity of an intersection, the vicinity of a crossing, the vicinity of a temporary stop position, or the like can be finely specified. With this configuration, it is possible to efficiently confirm a driving situation of the driver at the time of viewing the video.

On the other hand, when designating the end point 408, it is sufficient if the end point candidate 404 can be selected in such a way that a section that the administrator desires to view a video thereof is included, and it is not necessary to perform the designation with a high frequency, such as the first time interval. Therefore, the second time interval may be longer than the first time interval. For this reason, in the present embodiment, as an example, the first time interval is set to 3 seconds, and the second time interval is set to 60 seconds. In addition, in a case where the start point 402 is corrected and a new start point 402 is set as described above, the end point candidate display unit 314 extracts again, as the end point candidates 404, a plurality of track point items 401 each representing the position with a time interval of 60 seconds (second time interval) from a time associated to the new start point 402, and displays the extracted track point items in a selectable state. In this manner, the end point candidates 404 are corrected in accordance with the correction of the start point 402.

In a case where there is a plurality of end point candidates 404 within the predetermined range, the end point candidate display unit 314 displays an identification mark 405 indicating that there is a plurality of end point candidates 404. The identification mark 405 may be displayed in the vicinity of the plurality of end point candidates 404 within the predetermined range, or may be displayed instead of an indicator displayed in a case where there is not a plurality of end point candidates 404 within the predetermined range (that is, in a case where the identification mark 405 is not displayed).

In setting the start point 402, "a case where there is a plurality of track point items 401 within the predetermined range" means "a case where a plurality of track point items 401 are displayed in an overlapping manner on the map". That is, the predetermined range at the time of setting the start point 402 is a range in which the track point items 401 are displayed in an overlapping manner on the map. However, the predetermined range is merely an example. Examples of the predetermined range may include a range in which track point items 401 before and after one track point item 401 are displayed in partial contact with the one track point item 401, or a range in which track point items 401 before and after one track point item 401 are displayed in a partially overlapping manner with the one track point item 401. Then, the predetermined range may vary between the case of setting the start point 402 and the case of displaying the identification mark 405.

In addition, in a case where the track point items 401 are displayed in contact with each other or displayed in an overlapping manner as described above, the track point items 401 that are displayed in contact with each other or displayed in an overlapping manner may be changed according to the scale of the map on which the track point items 401 are displayed. Therefore, the start point setting unit 313 or the end point candidate display unit 314 may confirm with the user of the management terminal 400 whether to display the list 403 or the identification mark 405 every time the scale of the map is changed.

In a case where there is a plurality of end point candidates 404 within the predetermined range (for example, in a case where the track point items 401 associated to the plurality of end point candidates 404 are displayed in an overlapping manner on the map), the identification mark 405 is in one of a first state 4011, a second state 4012, and a third state 4013 based on the plurality of track point items 401.

The first state 4011 indicates that the plurality of track point items 401 within the predetermined range includes only the track point item 401 corresponding to a time before a time corresponding to the track point item 401 associated to the set start point 402.

The second state 4012 indicates that the plurality of track point items 401 within the predetermined range includes only the track point item 401 corresponding to a time after the time corresponding to the track point item 401 associated to the set start point 402.

The third state 4013 indicates that the plurality of track point items 401 within the predetermined range includes both the track point item 401 corresponding to the time before the time corresponding to the track point item 401 associated to the set start point 402 and the track point item 401 corresponding to the time after the time corresponding to the track point item 401 associated to the set start point 402. As described above, the identification mark 405 is provided in a form that enables identification of the first state 4011, the second state 4012, and the third state 4013.

Furthermore, for example, as illustrated in Fig. 6, the identification mark 405 may include a candidate number mark 406 that enables identification of the number of end point candidates 404 within the predetermined range. That is, the identification mark 405 is provided in a form that enables identification of the number of end point candidates 404 within the predetermined range.

In a case where there is a plurality of end point candidates 404 within the predetermined range, the end point candidate display unit 314 may display the identification mark 405 including the candidate number mark 406, or may display only the candidate number mark 406 in the identification mark 405. Furthermore, when displaying the end point candidates 404 in a selectable state, the end point candidate display unit 314 may display a time interval mark 407 indicating how long each of the end point candidates 404 is separated from the time associated to the start point 402. In the present embodiment, the second time interval is set to 60 seconds, but this time interval of 60 seconds may be dynamically changed according to the situation.

Specifically, the end point candidate display unit 314 may set the second time interval based on at least one of object information 600 indicating vehicle information corresponding to the track point item 401 or surrounding information 700 indicating the surroundings of the vehicle corresponding to the track point item 401. The object information 600 refers to, for example, the travel information (the information regarding the traveling direction of the vehicle and the information regarding the speed of the vehicle), the vehicle type information, the driver information, and the like in the track point information 400 acquired from the vehicle terminal 200. The object information 600 is stored in the storage unit 320 of the server device 300, for example. Then, for example, the second time interval is dynamically set according to the information regarding the speed of the vehicle in the object information 600.

In this case, for example, the end point candidate display unit 314 can set the second time interval to be shorter as the speed of the vehicle increases, and can set the second time interval to be longer as the speed of the vehicle decreases. With this configuration, the excessive divergence or proximity of the plurality of end point candidates 404 is suppressed.

On the other hand, the end point candidate display unit 314 can set the second time interval to be longer as the speed of the vehicle increases, and can set the second time interval to be shorter as the speed of the vehicle decreases. With this configuration, the user of the video acquisition system 100 acquires a video for a longer time as the speed of the vehicle increases, and acquires a video for a shorter time as the speed of the vehicle decreases.

The surrounding information 700 refers to, for example, the time information such as the date and time, the weather information associated to the time information, the traffic jam status information, the place name information, the gradient information, and the like in the track point information 400 acquired from the vehicle terminal 200. The surrounding information 700 is stored in the storage unit 320 of the server device 300, for example. For example, in a case where the surrounding information 700 is the traffic jam status information, the end point candidate display unit 314 can set the second time interval to be longer in a case where the traffic jam status information is obtained than in a case where the traffic jam status information is not obtained.

Further, as described above, in a case where the plurality of track point items 401 corresponding to the time from the start of the stop of the vehicle to the end of the stop of the vehicle in the list 403 are integrated, the end point candidate display unit 314 may extract the end point candidates 404 based on at least one of a track point item 401 corresponding to the start time of the stop of the vehicle or a track point item 401 corresponding to the end time of the stop of the vehicle and display the extracted end point candidates 404 in a selectable state as illustrated in Fig. 5.

Specifically, the end point candidate display unit 314 extracts, as the end point candidates 404, at least one of the track point items 401 each representing the position with a time interval of 60 seconds before the start time of the stop of the vehicle (December 12, 2021, 10:00:00 in Fig. 5) or the track point items 401 each representing the position with a time interval of 60 seconds after the end time of the stop of the vehicle (December 12, 2021, 10:00:12 in Fig. 5).

The section setting unit 315 receives selection of any one of the end point candidates 404 from the input unit 410 of the management terminal 400 via the communication unit 330 and the communication unit 430, and sets the track point item 401 associated to the selected end point candidate 404 as the end point 408. The end point 408 in the present embodiment refers to a point selected after the start point 402 described above, and is not necessarily a point indicating a time after the start point 402.

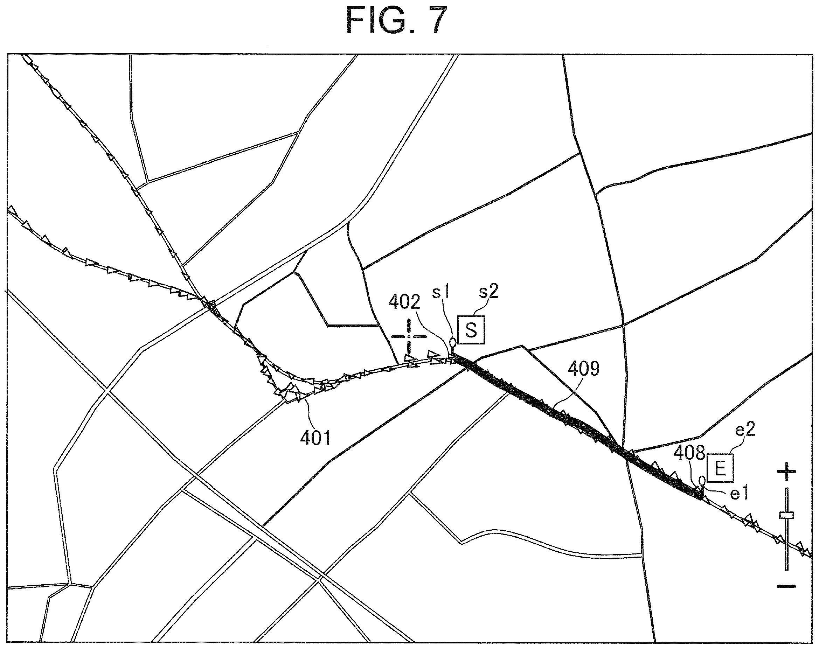

When selecting the end point 408, a cursor is placed on a target end point candidate 404 with a mouse or the like, and the selection is performed by clicking or the like. As illustrated in Fig. 7, a pin-shaped end point pin e1 is displayed at the set end point 408, and an end point mark e2 indicated by the alphabet E is displayed in the vicinity of the end point mark e1. Then, the section setting unit 315 sets, as a designated section 409, a section defined by the track point item 401 set as the start point 402 and the track point item 401 set as the end point 408.

In a case where there is a plurality of end point candidates 404 within the predetermined range (for example, in a case where the track point items 401 associated to the plurality of end point candidates 404 are displayed in an overlapping manner on the map) when receiving selection of any one of the end point candidates 404, the section setting unit 315 displays the plurality of end point candidates 404 as a list (not illustrated) in a selectable state.

This list is similar to the list 403 when selecting the start point 402 described above, and the list may include, for example, any of the above-described track point information 400 such as the information regarding the traveling direction of the vehicle. The end point candidate display unit 314 may display the identification mark 405 in a form that enables identification of the first state 4011, the second state 4012, and the third state 4013 only when the list is displayed.

The video acquisition unit 316 receives an operation from the input unit 410 of the management terminal 400 via the communication unit 330 and the communication unit 430, and requests the vehicle terminal 200 to upload the video information 500 corresponding to the designated section 409 designated by the section setting unit 315 to the server device 300. Specifically, the video acquisition unit 316 specifies a section from the start to the end of a video to be acquired based on the above-described time information associated to the start point 402 of the designated section 409 and the time information associated to the end point 408 of the designated section 409, and requests the vehicle terminal 200 to transmit a video corresponding to the section. Then, the video acquisition unit 316 transmits, to the communication unit 430 of the management terminal 400, the video information 500 transmitted from the vehicle terminal 200 in response to the request and received by the communication unit 330, and the video information 500 is displayed on the output unit 420 of the management terminal 400. In addition, in a case where there is video information 500 that is stored together with one set of the track point information 400 in the vehicle terminal 200 as described above and needs to be transmitted to the server device 300 even in a case where there is no request, the video acquisition unit 316 may acquire the video information 500 via the communication unit 330 and store the video information 500 in the storage unit 320. The video information 500 stored in the storage unit 320 is used for the thumbnail image G or the like when displaying the list 403.

As illustrated in Fig. 1, the management terminal 400 includes the input unit 410, the output unit 420, and the communication unit 430. The input unit 410 is an input device such as a keyboard. The output unit 420 is an output device such as a display. The communication unit 430 is a communication device for transmitting and receiving information to and from other devices.

The input device 410 receives an input from the administrator who operates the management terminal 400. The output unit 420 displays information received by the communication unit 430 from the server device 300. The communication unit 430 communicates with the communication unit 330 of the server device 300, and transmits, to the server device 300, information input to the input unit 410. Furthermore, the communication unit 430 receives information transmitted from the communication unit 330 of the server device 300.

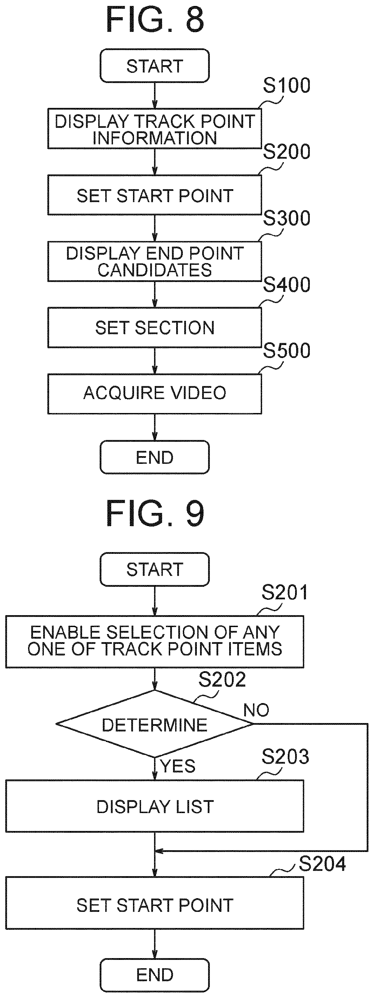

Next, an operation (information processing method) of the video acquisition system 100 having the above-described configuration will be described with reference to flowcharts of Figs. 8 to 11. A video acquisition program (information processing program) can be obtained by configuring the flowcharts of Figs. 8 to 11 as a program executed by a computer including a CPU and the like. The video acquisition program may be stored in a computer-readable storage medium.

First, as illustrated in Fig. 8, when the input unit 410 of the management terminal 400 receives an operation and a travel history of the vehicle for which a video is desired to be confirmed is selected by the operation, the track point display unit 312 displays the track point information 400 corresponding to the selected travel history on the output unit 420 (step S100). Step S100 is a step corresponding to the track point display step in the above-described embodiment.

The travel history is created in advance based on the track point information 400 transmitted from the above-described vehicle terminal 200 to the server device 300 as needed. In step S100, the track point items 401 each representing the position of the vehicle with a time interval of 3 seconds are displayed on the map as the track of the vehicle. Here, the user who operates the management terminal 400 visually confirms a traveling route of the vehicle, the traveling direction, the speed of the vehicle, and the like by confirming the track point items 401.

Next, the input unit 410 of the management terminal 400 receives the operation, and the start point setting unit 313 sets any one of the track point items 401 as the start point 402 (step S200). Step S200 is a step corresponding to the first selection point setting step in the above-described embodiment.

As illustrated in Fig. 9, in step S200, first, selection of any one of the track point items 401 on the map displayed on the output unit 420 is enabled (step S201). Here, the start point 402 is selected by, for example, performing a mouse over with a cursor on the track point item 401 or placing the cursor of the mouse on the track point item 401 and clicking the track point item 401. Next, it is determined whether or not there is a plurality of track point items 401 within the predetermined range (step S202). Here, for example, a condition that the track point items 401 partially or entirely overlap each other may be used. Then, if the determination result is YES, the processing proceeds to step S203, and if the determination result is NO, the processing proceeds to step S204.

In step S203, the plurality of track point items 401 determined to be within the predetermined range is displayed as the list 403 on the output unit 420 in a selectable state. Since the list 403 includes the track point information 400 and the video information 500 as described above, the user who operates the management terminal 400 can select an arbitrary track point item 401 with reference to the track point information 400 and the like displayed in the list 403. When the display of the list 403 is completed, the processing proceeds to step S204. In step S203, the track point items 401 in the list 403 may be organized.

For example, in a case where the list 403 includes a plurality of track point items 401 corresponding to a time from the start of the stop of the vehicle to the end of the stop of the vehicle (for example, this occurs in a case where track point items are displayed in an overlapping manner on the map due to the stop of the vehicle), items other than one track point item 401 among the plurality of track point items 401 corresponding to the time from the start of the stop of the vehicle to the end of the stop of the vehicle in the list 403 may be deleted from the list 403 as illustrated in Fig. 4.

In addition, as illustrated in Fig. 5, the start point setting unit 313 may integrate the plurality of track point items 401 corresponding to the time from the start of the stop of the vehicle to the end of the stop of the vehicle in the list 403, and display the integrated track point items as one track point item 401 corresponding to a predetermined time from the start of the stop of the vehicle to the end of the stop of the vehicle in the list 403.

In step S204, selection of any one of the track point items 401 is received, and the selected track point item 401 is set as the start point 402. Once the start point 402 is set, the start point pin s1 and the start point mark s2 are displayed at the set start point 402 on the map displayed on the output unit 420. As a result, step S200 ends, and the processing proceeds to step S300.

In step S300, a plurality of end point candidates 404 is extracted from the other track point items 401 based on the set start point 402, and displayed on the output unit 420 in a selectable state. Step S300 is a step corresponding to the second selection point candidate display step in the above-described embodiment.

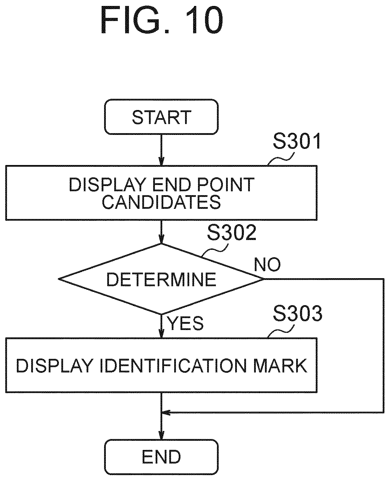

As illustrated in Fig. 10, in step S300, first, a plurality of track point items 401 each representing the position of the vehicle with a time interval of 60 seconds is extracted as the end point candidates 404 from the time associated to the set start point 402 and displayed on the output unit 420 (step S301).

At this time, in a case where the plurality of track point items 401 corresponding to the time from the start of the stop of the vehicle to the end of the stop of the vehicle in the list 403 are integrated in step S203 described above, the end point candidates 404 are extracted based on at least one of the track point item 401 corresponding to the start time of the stop of the vehicle or the track point item 401 corresponding to the end time of the stop of the vehicle, and the extracted end point candidates 404 are displayed in a selectable state as illustrated in Fig. 5.

Furthermore, in the present embodiment, the end point candidates 404 are extracted in units of 60 seconds, that is, in units of the second time interval, but the second time interval may be dynamically changed according to at least one of the object information 600 or the surrounding information 700 as described above. For example, the object information 600 may be the information regarding the speed of the vehicle, the second time interval may be set to be shorter as the speed of the vehicle increases, and the second time interval may be set to be longer as the speed of the vehicle decreases. In addition, the second time interval may be set to be longer in a case where the surrounding information 700 is the traffic jam status information, and the traffic jam status information is obtained than that in a case where the traffic jam status information is not obtained.

Next, it is determined whether or not there of a plurality of extracted end point candidates 404 within the predetermined range (step S302). If the determination result is YES, the processing proceeds to step S303, and if the determination result is NO, step S300 ends.

In step S303, the identification mark 405 indicating that there is a plurality of end point candidates 404 within the predetermined range is displayed on the output unit 420. At this time, the identification mark 405 may be displayed in the vicinity of the end point candidate 404, or may be displayed instead of an indicator of the end point candidate 404 displayed in a case where there is no end point candidate 404 within the predetermined range.

In addition, as described above, the identification mark 405 may be provided in a form that enables identification of the first state 4011, the second state 4012, and the third state 4013. At this time, as described above, the candidate number mark 406 indicating the number of end point candidates 404 may be displayed, or the time interval mark 407 indicating how long each of the end point candidates 404 is separated from the time associated to the start point 402 may be displayed. Next, the processing proceeds to step S400.

In step S400, the input unit 410 of the management terminal 400 receives an operation, and the section setting unit 315 sets the designated section 409. Step S400 is a step corresponding to the section setting step in the present invention.

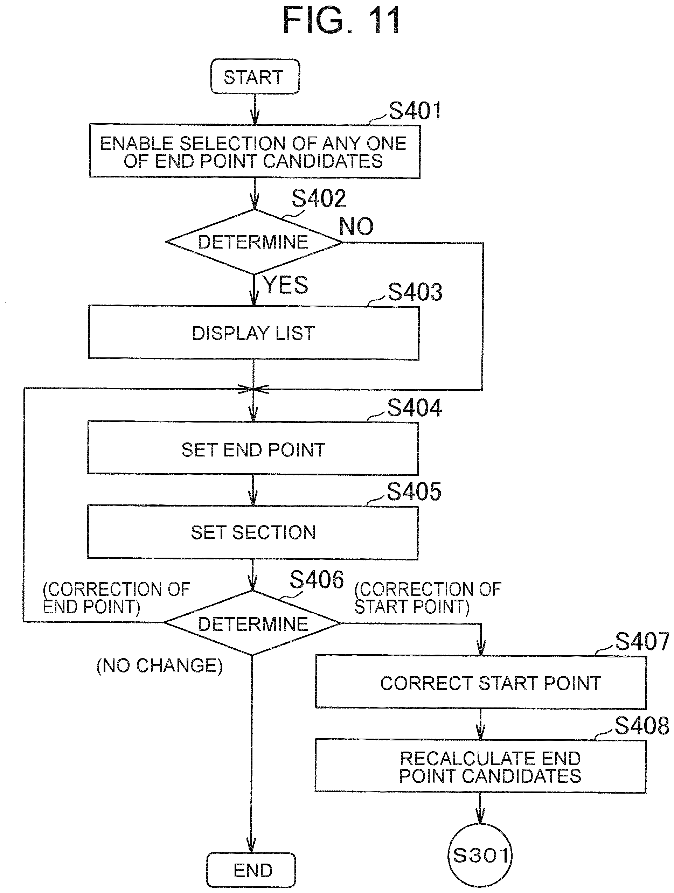

As illustrated in Fig. 11, in step S400, first, selection of any one of the end point candidates 404 on the map displayed on the output unit 420 is enabled (step S401). Next, it is determined whether or not there is a plurality of end point candidates 404 within the predetermined range (step S402). Here, for example, a condition that the end point candidates 404 partially or entirely overlap each other may be used. Then, if the determination result is YES, the processing proceeds to step S403, and if the determination result is NO, the processing proceeds to step S404.

In step S403, the plurality of end point candidates 404 determined to be within the predetermined range is displayed as the list on the output unit 420 in a selectable state. As a result, the user who operates the management terminal 400 can select an arbitrary end point candidate 404 with reference to the track point information 400 and the like displayed in the list. At this time, the list may include the track point information 400 such as the information regarding the traveling direction of the vehicle. In addition, when the list is displayed, the above-described identification mark 405 may be provided in a form that enables identification of the first state 4011, the second state 4012, and the third state 4013. Then, when the display of the list is completed, the processing proceeds to step S404.

In step S404, selection of any one of the end point candidates 404 is received, and the selected end point candidate 404 is set as the end point 408. As a result, the end point 408 is determined. Once the end point 408 is set, the end point pin e1 and the end point mark e2 are displayed at the set end point 408 on the map displayed on the output unit 420. Then, the processing proceeds to step S405. In step S405, a section defined by the track point item 401 set as the start point 402 and the track point item 401 set as the end point 408 is set as the designated section 409. Next, the processing proceeds to step S406.

In step S406, it is determined whether or not to receive correction of the start point 402 or the end point 408. Then, in a case where it is determined to receive the correction of the end point 408 in this state, the end point candidates 404 become selectable again, and the processing returns to step S404.

On the other hand, in a case where it is determined to receive the correction of the start point 402, the processing proceeds to step S407. In step S407, the start point 402 is corrected. Specifically, the start point pin s1 is moved to another track point item 401, and the movement destination is set as a new start point 402. Next, the processing proceeds to step S408.

In step S408, the end point candidates 404 are recalculated. Then, once the recalculation ends, the processing returns to step S301. In step S301, a plurality of track point items 401 are extracted as the end point candidates 404 based on the result of the recalculation and displayed on the output unit 420. Thereafter, the operation as in step S300 described above is performed, and the processing proceeds to S400. Then, the operation as in step S400 described above is performed, and the processing proceeds to step S406. As a result, the end point 408 is reset in step S404, and the designated section 409 is reset in step S405.

In a case where it is determined in step S406 not to receive both the correction of the start point 402 and the correction of the end point 408 (that is, it is determined that no change is to be made), step S400 ends. Then, once step S400 ends, the processing proceeds to step S500.

In step S500, the input unit 410 of the management terminal 400 receives an operation, and the video acquisition unit 316 acquires the video information 500 corresponding to the designated section 409. In step S500, first, the vehicle terminal 200 is requested to upload the video information 500 corresponding to the designated section 409 designated by the section setting unit 315 to the server device 300 via the communication unit 330. Next, the video acquisition unit 316 stores, in the storage unit 320, the video information 500 transmitted from the vehicle terminal 200 in response to the request and received by the communication unit 330, transmits the video information 500 to the communication unit 430, and displays the video information 500 on the output unit 420 of the management terminal 400. As a result, step S500 ends, and the video acquisition system 100 ends.

According to the present embodiment, when receiving the selection of any one of the track point items 401, in a case where there is a plurality of track point items 401 within the predetermined range, the start point setting unit 313 displays the plurality of track point items 401 as the list 403 in a selectable state. With this configuration, the start point 402 can be selected while confirming the list 403. Therefore, for example, even in a case where there is a plurality of track point items 401 within the predetermined range, such as a case where the track point items 401 are densely arranged or overlap each other, the selection of the track point item 401 can be easily performed.

Furthermore, the list 403 can include at least one of the time information, the weather information, the traffic jam status information, the place name information, the gradient information, the information indicating going or returning on the traveling route of the vehicle, the information regarding the traveling direction of the vehicle, or the information regarding the speed of the vehicle corresponding to the track point item 401. With this configuration, it is possible to select the track point item 401 after confirming the information such as the date and time, the weather, the traffic jam status, the traveling direction or speed of the vehicle, or the like corresponding to the track point item 401.

In addition, the list 403 can include a video corresponding to the track point item 401, the video being captured by the vehicle. With this configuration, the track point item 401 can be selected after confirming the video in the list 403.

In addition, the start point setting unit 313 can delete, from the list 403, items other than one track point item 401 among the plurality of track point items 401 corresponding to the time from the start of the stop of the vehicle to the end of the stop of the vehicle in the list 403. With this configuration, the track point items 401 displayed as the list 403 can be organized and reduced. As a result, it is possible to reduce time and effort for selecting one track point item 401 from the plurality of track point items 401 when selecting the track point item 401 in the list 403 as compared with a configuration in which items other than the one track point item 401 are not deleted from the list 403.

In addition, the start point setting unit 313 can integrate the plurality of track point items 401 corresponding to the time from the start of the stop of the vehicle to the end of the stop of the vehicle in the list 403, and display the integrated track point items as one track point item 401 corresponding to a predetermined time from the start of the stop of the vehicle to the end of the stop of the vehicle in the list 403. With this configuration, the track point items 401 displayed as the list 403 can be organized and reduced. As a result, it is possible to reduce time and effort for selecting one track point item 401 from the plurality of track point items 401 when selecting the track point item 401 in the list 403 as compared with a configuration in which the plurality of track point items 401 are not integrated.

Furthermore, in a case where the start point setting unit 313 integrates the plurality of track point items 401 corresponding to the time from the start of the stop of the vehicle to the end of the stop of the vehicle in the list 403 and displays the integrated track point items as one track point item 401 corresponding to a predetermined time from the start of the stop of the vehicle to the end of the stop of the vehicle in the list 403, the end point candidate display unit 314 can extract the end point candidates 404 with reference to at least one of the track point item 401 corresponding to the start time of the stop of the vehicle or the track point item 401 corresponding to the end time of the stop of the vehicle and display the extracted end point candidates in a selectable state. With this configuration, in a case where the plurality of track point items 401 corresponding to the time from the start of the stop of the vehicle to the end of the stop of the vehicle in the list 403 are integrated, the end point candidates 404 can be extracted with reference to at least one of the track point item 401 corresponding to the start time of the stop of the vehicle or the track point item 401 corresponding to the end time of the stop of the vehicle.

In addition, after setting any one of the track point items 401 as the start point 402, the start point setting unit 313 receives correction of the start point 402 to another track point item 401 in units of the first time interval, and sets the another track point item 401 as a new start point 402. The end point candidate display unit 314 extracts again, as the end point candidates 404, a plurality of track point items 401 each representing the position with a second time interval from a time associated to the new start point 402, and displays the extracted track point items 401 in a selectable state. With this configuration, it is possible to reduce time and effort for considering a track point item 401 to be set as the end point 408 as compared with the case of considering a track point item 401 to be set as the start point 402. Furthermore, in a case where the start point 402 is corrected, the end point candidates 404 are extracted again in units of the second time interval, and thus, it is possible to reduce time and effort for considering a track point item 401 to be selected while finely adjusting the designated section. Fine adjustment of a section for acquiring a video is enabled when designating the section from a movement track of an object displayed on a map, and time and effort for the adjustment is reduced, so that usability can be improved.

In addition, the end point candidate display unit 314 can set the second time interval based on at least one of the object information 600 indicating the vehicle information corresponding to the track point item 401 or the surrounding information 700 indicating the surroundings of the object corresponding to the track point item 401. With this configuration, the second time interval can be dynamically changed according to the state of the object corresponding to the track point item 401 and the surroundings of the object corresponding to the track point item 401.

In addition, in a case where the object information 600 is the information regarding the speed of the vehicle, the end point candidate display unit 314 can set the second time interval to be shorter as the speed of the vehicle increases, and can set the second time interval to be longer as the speed of the vehicle decreases. With this configuration, for example, in a case of acquiring a video when the vehicle is traveling at a high speed on an expressway, it is possible to prevent the amount of information obtained from the acquired image from becoming too large. Furthermore, for example, in a case of acquiring a video when the vehicle is traveling at a low speed on a general road, it is possible to prevent the amount of information obtained from the acquired image from becoming too small. Further, with this configuration, the excessive divergence or proximity of the plurality of end point candidates 404 is suppressed.

Further, in a case where the surrounding information 700 is the traffic jam status information, the end point candidate display unit 314 can set the second time interval to be longer in a case where the traffic jam status information is obtained than in a case where the traffic jam status information is not obtained. With this configuration, in a case of acquiring a video in a situation where it is difficult for the vehicle to travel in the traveling direction due to occurrence of a traffic jam, it is possible to prevent information obtained from the acquired image from becoming too small.

Furthermore, in a case where there is a plurality of end point candidates 404 within the predetermined range, the end point candidate display unit 314 displays an identification mark 405 indicating that there is a plurality of end point candidates 404. With this configuration, even in a case where the end point candidates 404 extracted based on the start point 402 are densely arranged or overlap each other, for example, and the end point candidates 404 thus become difficult to recognize or become difficult to select, the situation can be easily confirmed by confirming the identification mark 405. Therefore, in a case where there is a plurality of other candidate track point items 401 extracted based on one selected track point item 401 within the predetermined range, the track point items 401 as the candidates can be easily recognized and selected.

In addition, in a case where there is a plurality of end point candidates 404 within the predetermined range, the end point candidate display unit 314 can display the identification mark 405 for the plurality of end point candidates 404 instead of the indicator displayed in a case where there is not a plurality of end point candidates 404 within the predetermined range. In this way, in a case where there is a plurality of end point candidates 404 within the predetermined range, the identification mark 405 can be displayed instead of the indicator displayed in a case where there is not a plurality of end point candidates 404 within the predetermined range, that is, a normal indicator, so that it is possible to emphasize that there is a plurality of end point candidates 404 and improve the visibility for the user.

In addition, the identification mark 405 can be provided in a form that enables identification of the first state 4011, the second state 4012, and the third state 4013 based on the plurality of track point items 401 within the predetermined range. In this way, it is possible to confirm which end point candidates 404 are densely arranged or overlap each other within the predetermined range only by confirming the state of the identification mark 405 without examining the types of the end point candidates 404 for which the identification mark 405 is displayed. Therefore, it is possible to reduce time and effort for consideration when selecting the end point 408.

In addition, in a case where there is a plurality of end point candidates 404 within the predetermined range when receiving selection of any one of the end point candidates 404, the section setting unit 315 can display the plurality of end point candidates 404 as the list 403 in a selectable state. In this way, the end point 408 can be selected while confirming the list 403. Therefore, in a case where there is a plurality of other candidate track point items 401 extracted based on one selected track point item 401 within the predetermined range, the track point items 401 as the candidates can be easily recognized and selected.

In addition, since the identification mark 405 is provided in a form that enables identification of the number of end point candidates 404 within the predetermined range, the number of end point candidates 404 within the predetermined range becomes clear, and the number of end point candidates 404 can be easily confirmed.

In addition, the section setting unit 315 displays a plurality of end point candidates 404 as the list in a selectable state in a case where there is a plurality of end point candidates 404 within the predetermined range when receiving selection of any one of the end point candidates 404, and the identification mark 405 can be provided in a form that enables identification of the first state 4011, the second state 4012, and the third state 4013 based on the plurality of track point items 401 within the predetermined range when the list is displayed. In this way, when the list 403 is displayed, the first state 4011, the second state 4012, and the third state 4013 of the identification mark 405 can be identified.

In addition, the identification mark 405 is provided including the candidate number mark 406 that enables identification of the number of end point candidates 404 within the predetermined range, and the end point candidate display unit 313 can display the candidate number mark 406 in a case where there is a plurality of end point candidates 404 within the predetermined range. Therefore, the number of end point candidates 404 within the predetermined range becomes clear, and the number of end point candidates 404 can be easily confirmed. In this case, since only the candidate number mark 406 can be displayed as the identification mark 405, it is possible to prevent the number of marks displayed on the map from becoming too large.

In addition, the end point candidate display unit 314 can extract, as the end point candidates 404, a plurality of track point items 401 each representing the position of the vehicle with a predetermined time interval from the time associated to the set start point 402, and display the extracted track point items 401 in a selectable state, and at the time of the display, the end point candidate display unit 314 can display the time interval mark 407 indicating how long each of the end point candidates 404 is separated from the time associated to the start point 402. In this way, it becomes clear how long each of the end point candidates 404 is separated from the time associated to the start point 402, and thus, it is possible to reduce time and effort for consideration when selecting the end point 408.

The present invention is not limited to the above-described embodiments. That is, those skilled in the art can make various modifications without departing from the gist of the present invention according to conventionally known knowledge. The modifications are naturally included in the scope of the present invention as long as the display device according to the present invention can be provided by such modifications.

### Reference Signs List

300 server device (display device)
400 management terminal (display device)
313 start point setting unit (first selection point setting unit)
314 end point candidate display unit (second selection point candidate display unit)
315 section setting unit
401 track point item (item)
402 start point (first selection point)
403 list
404 end point candidate (second selection point candidate)
405 identification mark
408 end point (second selection point)
409 designated section

## Claims

1. A display device that displays items each representing a position of an object with a first time interval as a track of the object on a map, the display device comprising:
a first selection point setting unit that receives selection of any one of the items and sets the selected item as a first selection point;
a second selection point candidate display unit that extracts, as second selection point candidates, the plurality of items each representing the position of the object with a second time interval longer than the first time interval from a time associated to the first selection point having been set, and displays the extracted items in a selectable state; and
a section setting unit that receives selection of any one of the second selection point candidates, sets an item associated to the selected second selection point candidate as a second selection point, and sets a section defined by the item having been set as the first selection point and the item having been set as the second selection point as a designated section, wherein
after setting any one of the items as the first selection point, the first selection point setting unit receives correction of the first selection point to another item in units of the first time interval, and sets the another item as a corrected first selection point, and
the second selection point candidate display unit extracts again, as the second selection point candidates, the plurality of items each representing the position with a second time interval from a time associated to the corrected first selection point, and displays the extracted items in a selectable state.

2. The display device according to claim 1, wherein the second selection point candidate display unit sets the second time interval based on at least one of object information indicating information regarding the object corresponding to the item or surrounding information indicating surroundings of the object corresponding to the item.

3. The display device according to claim 2, wherein
the object information is information regarding a speed of the object, and
the second selection point candidate display unit sets the second time interval to be shorter as a traveling speed of the object increases, and sets the second time interval to be longer as the traveling speed of the object decreases.

4. The display device according to claim 2, wherein
the surrounding information is traffic jam status information, and
the second selection point candidate display unit sets the second time interval to be longer in a case where the traffic jam status information is obtained than in a case where the traffic jam status information is not obtained.

5. An information processing method executed by a computer, the information processing method comprising:
a track point display step of displaying items each representing a position of an object with a first time interval as a track of the object on a map;
a first selection point setting step of receiving selection of any one of the items and setting the selected item as a first selection point;
a second selection point candidate display step of extracting, as second selection point candidates, the plurality of items each representing the position of the object with a second time interval longer than the first time interval from a time associated to the first selection point having been set, and displaying the extracted items in a selectable state; and
a section setting step of receiving selection of any one of the second selection point candidates, setting the item associated to the selected second selection point candidate as a second selection point, and setting a section defined by the item having been set as the first selection point and the item having been set as the second selection point as a designated section, wherein
in the section setting step, after setting the designated section, correction of the first selection point to another item is received in units of the first time interval, and the another item is set as a corrected first selection point, and the plurality of items each representing the position with a second time interval are extracted again as the second selection point candidates from a time associated to the corrected first selection point, and the extracted items are displayed in a selectable state.

6. An information processing program that causes a computer to execute the information processing method according to claim 5.

7. A computer-readable storage medium storing the information processing program according to claim 6.
